# FASCICULE DE BREVET EUROPEEN

(11) **EP 1 420 614 B1**
(45) Date de publication et mention de la délivrance du brevet: **17.03.2010**
(21) Numéro de dépôt: 03292812.9
(22) Date de dépôt: 12.11.2003
(51) Int. Cl.: H05B 6/12, H05B 6/36

(54) **Dispositif inducteur pour foyer de cuisson par induction**
Induktoranordnung für Induktionskochgeräte
Inductor apparatus for induction cooktop

(30) Priorité: 12.11.2002 FR 0214113
(43) Date de publication de la demande: 19.05.2004
(73) Titulaire: FAGORBRANDT SAS, 92500 Rueil Malmaison (FR)
(72) Inventeur: Roux, Alain, 45100 Orleans (FR)
(74) Mandataire: Santarelli

(56) Documents cités:
- EP-A- 0 706 303
- FR-A- 2 659 725
- US-A- 5 866 884

## Description

La présente invention concerne un dispositif inducteur pour foyer de cuisson par induction.

Elle concerne également une plaque de cuisson par induction.

De manière générale, l'invention concerne des dispositifs inducteurs utilisés pour chauffer par induction des récipients culinaires, notamment dans des tables de cuisson à usage domestique.

Classiquement, un dispositif inducteur comprend au moins un bobinage en matériau électriquement conducteur.

Un tel bobinage est constitué généralement d'un enroulement plat de fil de cuivre destiné à être alimenté, par l'intermédiaire d'un onduleur, par un courant à haute fréquence, comprise généralement entre 20 kHz et 50 kHz.

La circulation de ce courant dans la bobine a pour effet de créer un champ magnétique.

La circulation de ce champ magnétique dans un récipient culinaire placé sur un support au-dessus de l'inducteur provoque la circulation de courants induits dans le fond ferromagnétique de ce récipient. Ces courants induits ont pour effet de chauffer directement le récipient culinaire.

Bien que le rendement énergétique d'un tel dispositif inducteur soit élevé, et typiquement supérieur à 80 %, une certaine quantité d'énergie est dissipée dans le dispositif inducteur.

En premier lieu, du fait du passage du courant dans le bobinage, on observe une dissipation d'énergie par perte joule.

En outre, les bobinages sont généralement associés à des éléments conducteurs magnétiques ayant pour fonction de focaliser le champ magnétique engendré par le bobinage vers un récipient à chauffer disposé au-dessus du dispositif inducteur.

Le passage du champ magnétique dans ces éléments conducteurs magnétiques engendre également une dissipation d'énergie par perte fer.

On connaît un dispositif inducteur dans le document US 5 866 884 dans lequel la chaleur dissipée par le bobinage est transmise au récipient à chauffer.

Pour optimiser ce transfert de chaleur en direction du récipient, le bobinage est placé au-dessus d'une feuille en mica et d'un support en fibres de verre.

Ce support constitue un isolant thermique, empêchant la chaleur dissipée par le bobinage de se propager vers le générateur haute fréquence alimentant le dispositif inducteur.

De même, le document EP 0 706 303 décrit un dispositif inducteur dans lequel le bobinage est inséré dans un support isolant.

La présente invention a pour but de limiter les pertes thermiques qui ne participent pas à l'échauffement du récipient, et de diminuer ainsi l'échauffement global du dispositif inducteur.

A cet effet, la présente invention vise un dispositif inducteur pour foyer de cuisson par induction, comprenant au moins un bobinage en matériau électriquement conducteur disposé dans un plan et au moins un élément conducteur magnétique disposé dans un second plan en contact avec le bobinage.

Conformément à l'invention, ce dispositif inducteur comporte dans le second plan au moins un élément en matériau à capacité thermique élevée, égale à 4000 kJ/m³/K.

Ce matériau à forte capacité thermique placé contre le bobinage, en contact avec celui-ci, permet d'emmagasiner l'énergie calorifique dissipée par ce bobinage.

Lorsqu'une ventilation forcée est utilisée en association avec un tel dispositif inducteur, l'utilisation de matériau à forte capacité thermique permet soit de diminuer la ventilation forcée à puissance équivalente du dispositif inducteur, soit d'augmenter le temps de fonctionnement d'un tel dispositif inducteur à ventilation égale.

Selon une caractéristique préférée, l'élément en matériau à capacité thermique élevée s'étend dans un espace compris entre des éléments conducteurs magnétiques.

Cette disposition de l'élément en matériau à forte capacité thermique en contact avec le bobinage et entre les éléments conducteurs magnétiques permet de favoriser l'absorption de la chaleur dissipée par perte joule et par perte fer dans l'élément en matériau à forte capacité thermique.

Selon un mode de réalisation avantageux, lorsque le dispositif inducteur comprend plusieurs éléments conducteurs magnétiques disposés dans un second plan, l'élément en matériau à capacité thermique élevée s'étend entre chaque élément conducteur magnétique.

La présente invention concerne également une plaque de cuisson par induction, comprenant au moins deux foyers de cuisson.

Conformément à l'invention, cette plaque de cuisson comprend un dispositif inducteur tel que décrit précédemment associé à chaque foyer de cuisson.

D'autres particularités et avantages de l'invention apparaîtront encore dans la description ci-après.

Aux dessins annexés, donnés à titre d'exemples non limitatifs :
- la figure 1 est une vue en coupe transversale d'une plaque de cuisson conforme à l'invention ; et
- la figure 2 est une vue de dessous selon le plan II.II à la figure 1 d'un dispositif inducteur conforme à l'invention.

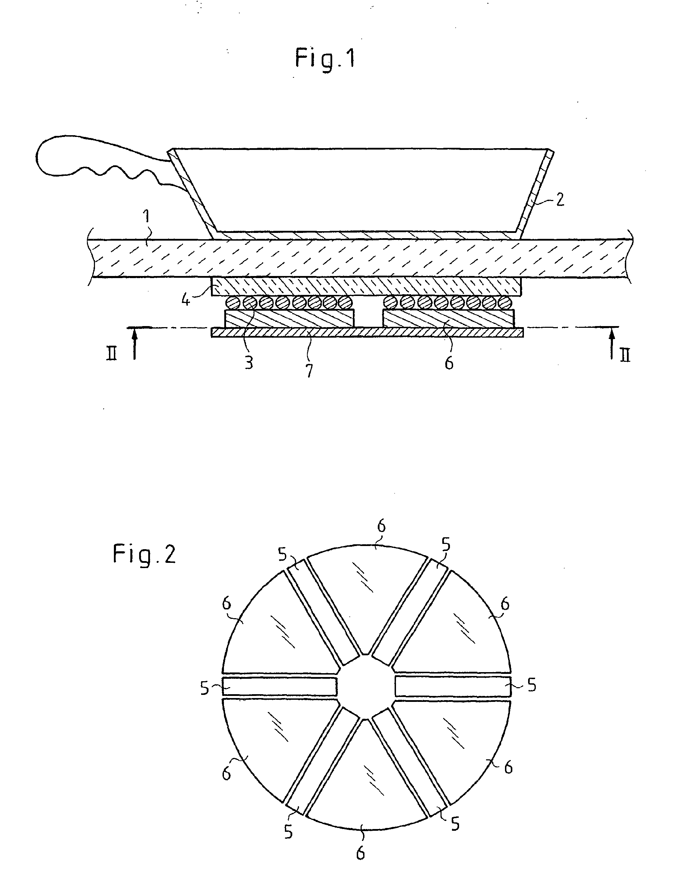

On va décrire tout d'abord en référence à la figure 1 une plaque de cuisson par induction conforme à la présente invention.

Classiquement, une telle plaque de cuisson comporte une plaque en vitrocéramique 1 formant support pour un récipient de cuisson 2, sous laquelle sont disposés un ou plusieurs dispositifs inducteurs.

De préférence, une telle plaque de cuisson par induction comprend au moins deux foyers de cuisson, et de préférence quatre foyers de cuisson, associés respectivement à un inducteur.

Chaque inducteur comprend de façon classique un bobinage 3 constitué d'un élément conducteur électrique.

Ce bobinage 3 peut être constitué d'un enroulement à plat, en spirale, d'un toron multibrin de fils de cuivre. Ici, ce bobinage 3 est en forme de disque.

Les fils de cuivre sont isolés électriquement et individuellement par une couche de verni.

Ce bobinage 3 est séparé de la plaque en vitrocéramique 1 par un isolant thermique 4.

Cet isolant thermique 4 est constitué ici d'une couche en matériau fibreux associé à une feuille de mica.

Le matériau fibreux peut être de la fibre de laine de roche.

L'isolant thermique 4 pourrait également être constitué d'une lame d'air.

De manière générale, cet isolant thermique 4 protège le bobinage 3 de tout échauffement par le récipient de cuisson 2.

Par ailleurs, des éléments conducteurs magnétiques 5 (voir figure 2) sont posés ou collés parallèlement au plan du bobinage 3.

Ces éléments conducteurs magnétiques 5 sont ici des barreaux de ferrite, disposés radialement sur le bobinage 3 en forme de disque.

A titre d'exemple non limitatif, le dispositif inducteur comporte ici six barreaux de ferrite disposés suivant des rayons à 60° les uns des autres.

Ces éléments conducteurs magnétiques 5 ont pour rôle de focaliser le champ magnétique engendré par le bobinage 3 lors du passage d'un courant à haute fréquence, du type 20 à 50 kHz.

Le champ magnétique est ainsi focalisé en direction du récipient de cuisson 2 à chauffer.

Les éléments conducteurs magnétiques 5 sont ainsi disposés dans un plan parallèle au plan du bobinage 3, et en dessous de ce bobinage lorsque le dispositif inducteur est placé sous le plan de cuisson en vitrocéramique 1.

Conformément à l'invention, des éléments à forte capacité thermique 6 sont disposés dans le même plan que les éléments conducteurs magnétiques 5, en contact direct avec le bobinage 3.

Ces éléments à forte capacité thermique permettent d'emmagasiner l'énergie calorifique dissipée par le bobinage lors du passage d'un courant électrique.

Ici, des éléments à forte capacité thermique 6 sont disposés entre chaque paire de barreaux de ferrite 5. Ils sont ainsi répartis en six secteurs angulaires disposés à 60° les uns des autres.

Par exemple, le matériau à forte capacité thermique peut être de l'alumine ayant une capacité thermique volumique de l'ordre de 4 000 kJ/m³/K.

Ce matériau pourrait être remplacé par une céramique de type mullite ou stéatique, ou encore par un matériau plastique de capacité thermique volumique importante.

Alternativement, ce matériau pourrait être un matériau composite de type plastique comprenant des charges minérales adaptées à augmenter la capacité thermique des matériaux.

A titre d'exemple, le matériau utilisé peut être un plastique chargé en fibres de verre.

On entend par matériau à forte capacité thermique tout matériau ayant une capacité thermique supérieure ou égale à 1 000 kJ/m³/K.

L'ensemble constitué du bobinage 3, des éléments conducteurs magnétiques 5 et des éléments en matériau à forte capacité thermique 6 est placé sur un support 7 en matériau amagnétique, par exemple en aluminium.

Le rôle de ce support 7 est de minimiser les champs magnétiques parasites du bobinage 3 en vue, notamment, de protéger le générateur haute fréquence placé en dessous du dispositif inducteur et qui alimente le bobinage 3.

Une ventilation forcée est utilisée en dessous du support 7 pour refroidir le dispositif inducteur. L'utilisation d'un matériau à forte capacité thermique 6 en contact direct avec le bobinage 3 permet de diminuer la ventilation forcée à température équivalente du dispositif inducteur. Réciproquement, elle permet d'augmenter le temps de fonctionnement du dispositif inducteur à ventilation égale.

On peut ainsi augmenter les performances du dispositif inducteur, c'est-à-dire sa durée de fonctionnement à une puissance donnée.

Bien entendu, de nombreuses modifications peuvent être apportées à l'exemple de réalisation décrit ci-dessus.

Ainsi, la répartition des barreaux de ferrite 5 et des secteurs 6 en matériau à forte capacité thermique peut être différente.

Le dispositif inducteur, en forme de disque dans l'exemple ci-dessus, peut être quelconque et en particulier être de forme carrée.

## Revendications

1. Dispositif inducteur pour foyer de cuisson par induction, comprenant au moins un bobinage (3) en matériau électriquement conducteur disposé dans un plan et au moins un élément de ferrite (5) disposé dans un second plan en contact avec le bobinage (3), **caractérisé en ce qu'**il comporte dans ledit second plan au moins un élément en matériau à capacité thermique élevée (6), sensiblement égale à 4000 kJ/m³/K.

2. Dispositif inducteur conforme à la revendication 1, **caractérisé en ce que** ledit élément (6) en matériau à capacité thermique élevée s'étend dans un espace compris entre des éléments de ferrite (5),

3. Dispositif inducteur conforme à l'une des revendications 1 ou 2, **caractérisé en ce qu'**il comprend plusieurs éléments de ferrite (5) disposés dans ledit second plan, un élément (6) en matériau à capacité thermique élevée s'étendant entre chaque élément de ferrite (5).

4. Dispositif inducteur conforme à l'une des revendications 1 à 3, **caractérisé en ce que** ledit bobinage (3) s'étend dans un disque et **en ce que** des éléments de ferrite (5) sont disposés suivant des rayons dudit disque, des éléments (6) en matériau à capacité thermique élevée s'étendant dans chaque secteur compris entre des éléments de ferrite (5) pris deux à deux.

5. Dispositif inducteur conforme à l'une des revendications 1 à 4, **caractérisé en ce que** les éléments (6) en matériau à capacité thermique élevée sont choisis parmi des matériaux en céramique, de l'alumine, des matériaux plastiques thermorésistants ou des matériaux composites tels que des plastiques comprenant des charges minérales.

6. Dispositif inducteur conforme à l'une des revendications 1 à 5, **caractérisé en ce que** les éléments de ferrite (5) sont des barreaux de ferrites.

7. Plaque de cuisson par induction, comprenant au moins deux foyers de cuisson, **caractérisé en ce qu'**il comprend un dispositif inducteur conforme à l'une des revendications 1 à 6 associé à chaque foyer de cuisson,

## Claims

1. Inductor device for an induction cooking plate, comprising at least one coil (3) made from electrically conductive material arranged in one plane and at least one ferrite element (5) arranged in a second plane in contact with the coil (3), **characterised in that** it comprises in said second plane at least one element (6) made from material with a high heat capacity, essentially equal to 4000 kJ/m³/K.

2. Inductor device according to claim 1, **characterised in that** said element (6) made from material with a high heat capacity extends in a space between ferrite elements (5).

3. Inductor device according to one of claims 1 or 2, **characterised in that** it comprises a plurality of ferrite elements (5) arranged in said second plane, an element (6) made from material with a high heat capacity extending between each ferrite element (5).

4. Inductor device according to one of claims 1 to 3, **characterised in that** said coil (3) extends in a disc and **in that** ferrite elements (5) are arranged along radii of said disc, elements (6) made from material with a high heat capacity extending in each sector between pairs of ferrite elements (5).

5. Inductor device according to one of claims 1 to 4, **characterised in that** the elements (6) made from material with a high heat capacity are selected from ceramic materials, alumina, heat-resistant plastic materials or composite materials such as plastics comprising mineral fillers.

6. Inductor device according to one of claims 1 to 5, **characterised in that** the ferrite elements (5) are ferrite rods.

7. Induction hob, comprising at least two cooking plates, **characterised in that** it comprises an inductor device according to one of claims 1 to 6 associated with each cooking plate.

## Patentansprüche

1. Induktionsvorrichtung für eine Kochstelle mit Induktion, mit mindestens einer in einer Ebene angeordneten Wicklung (3) aus elektrisch leitendem Material und mindestens einem in einer zweiten Ebene angeordneten Ferritelement (5), das mit der Wicklung (3) in Kontakt ist, **dadurch gekennzeichnet, dass** sie in der zweiten Ebene mindestens ein Element (6) aus einem Material mit einer hohen Wärmekapazität von im Wesentlichen 4000 kJ/m³/K aufweist.

2. Induktionsvorrichtung nach Anspruch 1, **dadurch gekennzeichnet, dass** sich das Element (6) aus Material mit hoher Wärmekapazität in einem Raum zwischen Ferritelementen (5) erstreckt.

3. Induktionsvorrichtung nach einem der Ansprüche 1 und 2, **dadurch gekennzeichnet, dass** sie mehrere in der zweiten Ebene angeordnete Ferritelemente (5) aufweist, wobei sich zwischen allen Ferritelementen (5) ein Element (6) aus Material mit hoher Wärmekapazität erstreckt.

4. Induktionsvorrichtung nach einem der Ansprüche 1 bis 3, **dadurch gekennzeichnet, dass** sich die Wicklung (3) in einer Scheibe erstreckt und Ferritelemente (5) entlang Radien der Scheibe angeordnet sind, wobei sich in jedem Sektor zwischen Paaren von Ferritelementen (5) Elemente (6) aus Material mit hoher Wärmekapazität erstrecken.

5. Induktionsvorrichtung nach einem der Ansprüche 1 bis 4, **dadurch gekennzeichnet, dass** die Elemente (6) aus Material mit hoher Wärmekapazität aus Keramikmaterialien, Aluminiumoxid, hitzebeständigen Kunststoffmaterialien oder Verbundmaterialien wie Kunststoffen mit mineralischen Füllstoffen ausgewählt sind.

6. Induktionsvorrichtung nach einem der Ansprüche 1 bis 5, **dadurch gekennzeichnet, dass** die Ferritelemente (5) Ferritstäbe sind.

7. Kochplatte mit Induktion, mit mindestens zwei Kochfeldern, **dadurch gekennzeichnet, dass** sie eine Induktionsvorrichtung nach einem der Ansprüche 1 bis 6 aufweist, die jeder Kochstelle zugeordnet ist.
